**Europäisches Patentamt**

**European Patent Office**

**Office européen des brevets**

(11) Veröffentlichungsnummer: **0 200 849**
**A2**

(12) # EUROPÄISCHE PATENTANMELDUNG

(21) Anmeldenummer: **86100805.0**

(22) Anmeldetag: **22.01.86**

(51) Int. Cl.⁴: **F 42 B 15/033, B 01 D 45/12**

(30) Priorität: **06.03.85 DE 3507892**

(43) Veröffentlichungstag der Anmeldung: **12.11.86**
**Patentblatt 86/46**

(84) Benannte Vertragsstaaten: **DE FR GB**

(71) Anmelder: **Rheinmetall GmbH,**
**Ulmenstrasse 125 Postfach 6609, D-4000 Düsseldorf**
**(DE)**

(72) Erfinder: **Büchele-Buecher, Sigfrid, Mönkesweg 53,**
**D-4005 Meerbusch-Strümp (DE)**
Erfinder: **Unterstein, Klaus, Ziegelstrasse 30,**
**D-4000 Düsseldorf 30 (DE)**

(54) **Gasgenerator.**

(57) Die Erfindung betrifft einen Gasgenerator (1) mit Heißgasfilter zur pyrotechnischen Erzeugung von Gasen aus einer Treibladung (11a).

Zwecks Reinigung der mit festen Verbrennungsrückständen verunreinigten Gase ist eine ringspaltförmig ausgebildete Filterkammer (13) vorgesehen, in die die in der Verbrennungskammer (11) erzeugten Gase durch tangential angeordnete Gaskanäle (12) eingeleitet werden. Nach Durchströmen der ringförmigen Filterkammer (13) umströmen die Gase die Stirnfläche (14a) eines zentralaxial angeordneten Mittelblocks (14), bevor sie in die schmutzempfindlichen Steuerkomponenten (in der Zeichnung nur schematisch dargestellt) gelangen. Anschließend treten die heißen Gase aus der Düse (15) aus. Durch Einwirkung der Zentrifugalkraft werden Schmutzteilchen gegen die Außenwandung der ringspaltförmigen Filterkammer (13) geschleudert und dort in dem Spezialprofil festgehalten.

### Gasgenerator

Die Erfindung bezieht sich auf einen Gasgenerator nach dem Oberbegriff des Patentanspruchs 1.

Zur Endphasensteuerung von Flugkörpern und Geschossen werden Impulstriebwerke eingesetzt, die mit hochgespanntem Gas eines Heißgasgenerators beaufschlagt werden.

Auf besonders einfache und wirtschaftliche Weise kann hochgespanntes Gas mit einem Gasgenerator erzeugt werden, der eine in fester Form vorliegende Treibladung pyrotechnisch umsetzt. Nachteilig bei einem solchen Gasgenerator ist jedoch die Verschmutzung der pyrotechnisch erzeugten Gase durch Verbrennungsrückstände und/oder mitgerissene Treibladungsteilchen. Diese Verschmutzungen beeinträchtigen die Funktion und damit die Betriebssicherheit von Steuerkomponenten, wie beispielsweise Magnet- und/oder Überdruckventilen, die für die Funktion des Impulstriebwerks notwendig sind.

Um die nachteilige Verschmutzung des im Gasgenerator erzeugten Gases zu beseitigen, muß nach dem Verbrennungsraum, in dem die Gase aus der Treibladung erzeugt werden, eine Filteranordnung vorgesehen werden. Einfache Siebe sind für diesen Zweck jedoch nicht geeignet, da sie der großen thermischen und mechanischen Belastung nicht standhalten. Es muß nämlich mit Verbrennungstemperaturen in der Größenordnung zwischen 1400 K und 2000 K, mit über 200 Bar liegenden Druckspitzen und hohen Strömungsgeschwindigkeiten des erzeugten Gases gerechnet werden. Darüber hinaus muß die Filteranordnung auch noch abschußfest sein.

0200849

Der Erfindung liegt die Aufgabe zugrunde, einen Gasgenerator mit einer zuverlässigen Filteranordnung anzugeben, die den erwähnten Beanspruchungen standhält, die erzeugten Gase zuverlässig von in fester Form vorliegenden Schmutzteilchen reinigt und die zudem zwecks einfacher und preisgünstiger Herstellung konstruktiv einfach aufgebaut ist.

Diese Aufgabe wird durch die in Patentanspruch 1 angegebene Erfindung gelöst.

Vorteilhafte Ausgestaltungen der Erfindung gehen aus den Unteransprüchen hervor.

Die Erfindung wird nachfolgend unter Bezug auf die Zeichnung näher erläutert. Dabei zeigt:

Fig. 1: einen Längsschnitt durch den Gasgenerator;

Fig. 2: einen Querschnitt entlang der Linie 2 - 2 gem. Fig. 1;

Fig. 3: eine stark vergrößerte Einzeldarstellung des Bereiches Z aus Fig. 1.

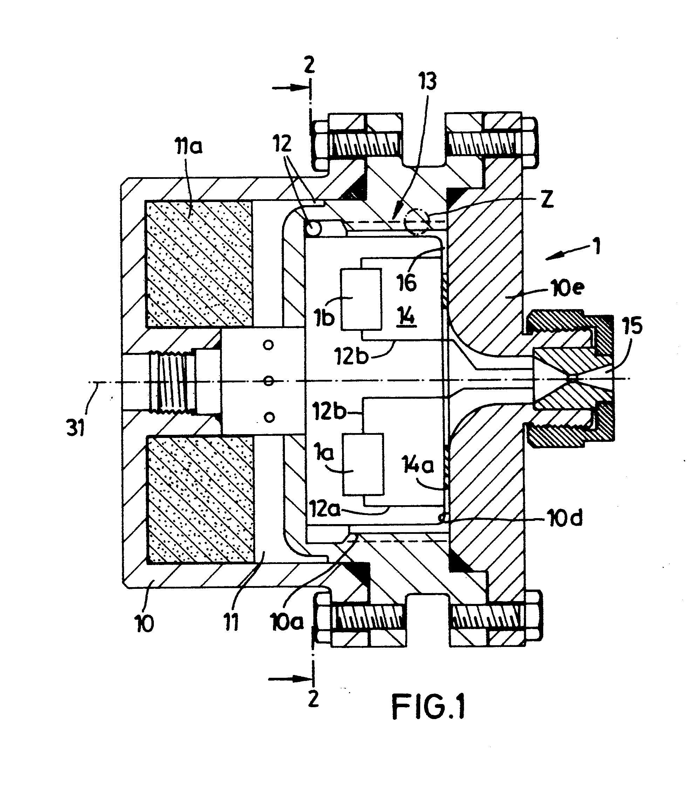

Fig. 1 zeigt einen Längsschnitt durch den Gasgenerator 1. Von einem Gehäuse 10 wird eine Verbrennungskammer 11 umschlossen, in der eine auf pyrotechnischem Wege gaserzeugende Treibladung 11a angeordnet ist. Die Verbrennungskammer 11 mündet in eine Düse 15, die das Innere des Gasgenerators 1 mit der Umgebung verbindet. Gasgenerator 1 ist in Verbindung mit den in der Zeichnung nur schematisch dargestellten Steuerelementen 1a, 1b als Impulstriebwerk für Flugkörper und/oder Geschosse einsetzbar und vermag - je nach Steuerung des erzeugten Gasstroms - deren Flugbahn vorzugsweise in der Endanflugphase zu beeinflussen.

0200849

Die von der Treibladung 11a erzeugten heißen Gase, die Temperaturen in der Größenordnung zwischen 1400 K und 2000 K aufweisen und mit einem Überdruck von über 200 Bar über Steuermittel 1a, 1b der Düse 15 zuströmen, sind mit festen Teilchen aus Verbrennungsrückständen bzw. mitgerissenen Treibladungsteilen verunreinigt und beeinträchtigen daher die Funktion der in der Zeichnung nur schematisch dargestellten Steuermittel 1a, 1b zur Steuerung des Gasstroms. Die Verschmutzungen können überdies den Querschnitt vorhandener Gaskanäle 12 verringern, so daß sich unerwünschte Strömungsverhältnisse einstellen.

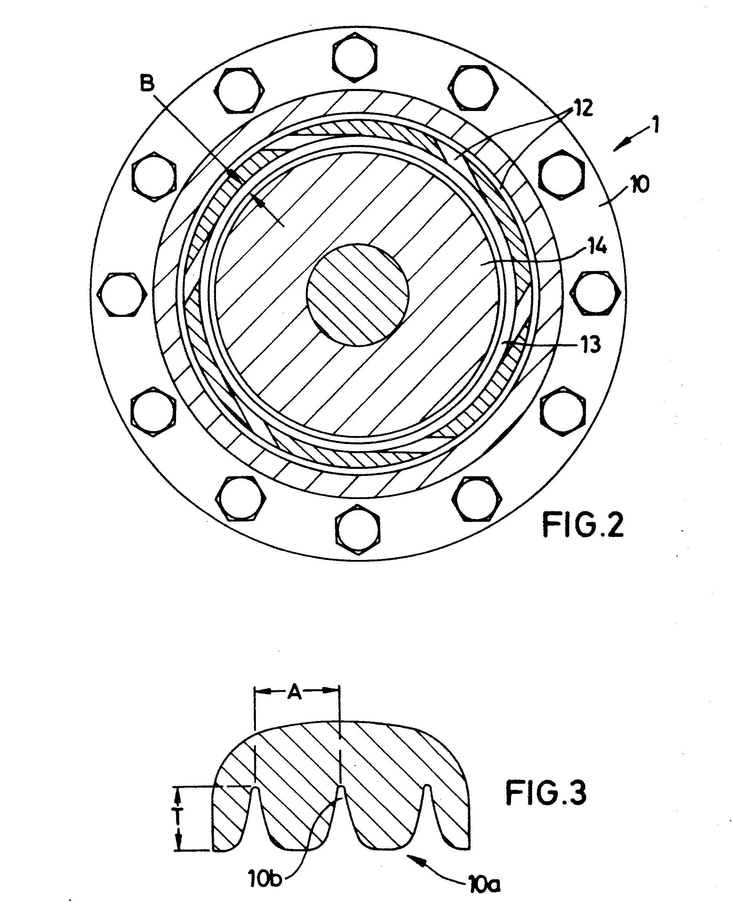

Um diese Verschmutzungen unschädlich zu machen, wird hinter der Verbrennungskammer 11 ein Filter angeordnet, der die vom Gasstrom mitgerissenen festen Teilchen nahezu vollständig zurückhält. Dieser Filter umfaßt eine ringspaltförmige Filterkammer 13, die von einem zentralen Mittelblock 14 und der diesen zentralen Mittelblock 14 koaxial umgebenden Innenoberfläche 10a des Gehäuses 10 gebildet wird. Die Innenoberfläche der ringförmigen Filterkammer 13 ist strukturiert und verfügt beispielsweise, wie aus der vergrößerten Detaildarstellung der Fig. 3 hervorgeht, über eine strukturierte Innenoberfläche 10a. Die Strukturierung wird durch in die Innenoberfläche 10a eingebrachte grabenförmige Vertiefungen 10b erzeugt, die ringgrabenförmig ausgestaltet sein können, vorzugsweise aber spiralförmig verlaufend ausgeführt sind. Die ringförge Filterkammer 13 ist - wie insbesondere aus Fig. 2 hervorgeht - über tangential einmündende Gaskanäle 12 mit der Verbrennungskammer 11 verbunden. Der Gasgenerator funktioniert folgendermaßen: Nach Anzünden der gaserzeugenden Treibladung 11a vermittels einer nicht dargestellten Anzündladung, die wiederum vorzugsweise durch ein Steuersignal elektrisch initiiert wird, bilden sich durch Verbrennung der Treib-

0200849

ladung 11a in der Verbrennungskammer 11 hochgespannte heiße Gase, die durch die tangential in die ringförmige Filterkammer 13 einmündenden Gaskanäle 12 in die Filterkammer 13 eingeleitet und dabei zu einer Kreisbewegung um den Mittelblock 14 gezwungen werden. Infolge der dabei auf die festen Schmutzteilchen einwirkenden Zentrifugalkraft werden diese in Radialrichtung nach außen geschleudert und setzen sich dabei in den grabenförmigen Vertiefungen 10b der strukturierten Innenoberfläche 10a des Gehäuses 10 fest. Die strukturierte Innenoberfläche sorgt dafür, daß einmal eingefangene Schmutzpartikel, die durch eine Benetzung mit Isolationsrückständen zusätzlich noch zum Verkleben neigen, festgehalten und durch nachströmendes Gas nicht wieder mitgerissen werden. Nach Passieren der ringförmigen Filterkammer 13 werden die im Verbrennungsraum 11 erzeugten Gase erneut in Radialrichtung nach innen zur Längsachse 31a des Gasgenerators 1 hin abgelenkt, da sie um die Stirnfläche 14a des Mittelblocks 14 herumströmen müssen. Da diese Strömungsrichtung der in Radialrichtung nach außen wirkenden Zentrifugalkraft entgegengesetzt gerichtet ist, gelingt es den schwereren Schmutzteilchen nicht, in die schmutzempfindlichen Steuerkomponenten 1a, 1b zu gelangen.

In dem zentral angeordneten Mittelblock 14 lassen sich in vorteilhafter, raumsparender Weise die in der Zeichnung nur schematisch dargestellten Steuerelemente, wie Ventile o. dgl. unterbringen, die beispielsweise eine Drosselung des Gasstroms bewirken können. Aus der ringspaltförmigen Filterkammer 13 gelangt der Gasstrom über Gaskanäle 12a in die im Mittelblock 14 angeordneten Steuermittel 1a, 1b. Von diesen Steuermitteln, die den Gasstrom beeinflussen, gelangt der Gasstrom über Gaskanäle 12b zur Düse 15.

0200849

Nach dem vorstehend erläuterten Prinzip lassen sich auch Gasgeneratoren mit einer relativ großen Abbrandquerschnittsfläche erzeugen, da die Filterwirksamkeit mit zunehmendem Filterkammerradius und ansteigender, linear vom Filterkammerradius abhängiger Zentrifugalkraft, noch besser wird.

Der Gasgenerator 1 ist mechanisch robust und einfach aufgebaut, da die Filterkammer 13 keine thermisch und/oder mechanisch anfälligen Siebelemente enthält. Der Gasgenerator 1 ist aufgrund seiner vergleichsweise einfachen Konstruktion auch leicht herstellbar, da nach Erzeugen der strukturierten Innenoberfläche 10a und Einbau des zentral angeordneten Mittelsblocks 14 eine voll funktionsfähige Filteranordnung vorliegt. Die Breite B der ringspaltförmigen Filterkammer 13 kann zwischen 1 mm und 4 mm liegen; in einem bevorzugten Ausführungsbeispiel beträgt die Breite B 2 mm. Die Höhe des Ringspalts der ringspaltförmigen Filterkammer 13 ist sehr stark abhängig von dem zur Verfügung stehenden Einbauvolumen. In einem Ausführungsbeispiel der Erfindung konnte mit einer Höhe von ca. 45 mm eine nahezu vollständige Säuberung der erzeugten Heißgase erreicht werden.

Die Tiefe T der grabenförmigen Vertiefungen 10b kann zwischen 1 mm und 5 mm liegen; besonders vorteilhafte Reinigungseffekte wurden mit einer Tiefe von 3 mm erreicht. Der Abstand A der grabenförmigen Vertiefungen 10b kann 1 mm bis 7 mm betragen; vorteilhafte Ergebnisse wurden mit einem Abstand von 4 mm erzielt. Der Boden der Vertiefungen 10b ist vorzugsweise abgerundet ausgebildet, und zwar mit einem unter 1 mm liegenden Krümmungsradius. Die Seitenwandungen der Vertiefungen 10b setzen

sich aus Flächenstücken mit unterschiedlichem Krümmungsradius zusammen, und zwar schließt sich an den Boden der Vertiefungen 10b zunächst ein Flächenstück mit einem größereren Krümmungsradius an, das schließlich über ein Flächenstück mit einem geringeren Krümmungsradius in die ebene Inenwandung 10a mündet.

RHEINMETALL GMBH            Düsseldorf, den 15.2.85

Akte R 965                 Bs/Sch


— 1 —



P a t e n t a n s p r ü c h e



1. Gasgenerator mit einer Verbrennungskammer und einer
   Düse, sowie einem zwischen Verbrennungskammer und Düse
   angeordneten Filter, d a d u r c h   g e k e n n -
   z e i c h n e t,   daß der Filter eine ringspaltförmige Filterkammer (13) mit einer strukturierten Innenoberfläche (10a) sowie tangential in die Filterkammer
   (13) einmündende Gaskanäle (12) umfaßt.


2. Gasgenerator nach Anspruch 1, d a d u r c h   g e -
   k e n n z e i c h n e t,   daß Mittel vorgesehen sind,
   zur Umlenkung der aus der Filterkammer (13) austretenden Gase in Radialrichtung nach innen.


— 2—

3. Gasgenerator nach einem der Ansprüche 1 und 2, d a -
d u r c h   g e k e n n z e i c h n e t, daß die
Mittel zum Umlenken der Gase aus einem zentralaxial
angeordneten Mittelbock (14) bestehen, dessen Stirnfläche (14a) mit der Innenoberfläche (10d) der Stirnwand (10e) des Gehäuse (10) einen ringscheibenförmigen
Spalt (16) bildet.

4. Gasgenerator nach einem der Ansprüche 1 bis 3, d a -
d u r c h   g e k e n n z e i c h n e t, daß die
Breite (B) des Ringspalts der ringspaltförmigen Filterkammer (13) zwischen 1 mm und 3 mm, vorzugsweise
2 mm beträgt.

5. Gasgenerator nach einem der Ansprüche 1 bis 4, d a -
d u r c h   g e k e n n z e i c h n e t, daß in der
Innenoberfläche (10a) grabenartige Vertiefungen (10b)
angeordnet sind.

6. Gasgenerator nach einem der Ansprüche 1 bis 5, d a -
d u r c h   g e k e n n z e i c h n e t, daß die
grabenartigen Vertiefungen (10b) spiralförmig in der
Innenwandung (10a) verlaufen.

7. Gasgenerator nach einem der Ansprüche 1 bis 6, d a -
d u r c h   g e k e n n z e i c h n e t, daß die
Tiefe (T) der Vertiefungen (10b) 1 mm bis 5 mm, insbesondere 3 mm beträgt und daß der Abstand (A) der
Vertiefungen (10b) 1 mm bis 7 mm, vorzugsweise 4 mm
beträgt.

FIG.1

0200849

FIG.2

FIG.3